# EUROPEAN PATENT SPECIFICATION

(11) **EP 4 027 008 B1**
(45) Date of publication and mention of the grant of the patent: **03.09.2025**
(21) Application number: 21382002.0
(22) Date of filing: 10.01.2021
(51) Int. Cl.: F03D 1/06

(54) **WIND TURBINE BLADES WITH DEFLECTOR AND METHOD**
WINDTURBINENSCHAUFELN MIT ABLENKER UND VERFAHREN
PALES D'ÉOLIENNE AVEC DÉFLECTEUR ET PROCÉDÉ

(43) Date of publication of application: 13.07.2022
(73) Proprietor: General Electric Renovables España S.L., 08005 Barcelona (ES)
(72) Inventor: PASTOUCHENKO, Nikolai, Niskayuna, NY New York 12309-1027 (US); MALCEVIC, Ivan K, Niskayuna, NY New York 12309-1027 (US); SCHUON, Gottfried, 08005 BARCELONA (ES)
(74) Representative: Bardehle Pagenberg S.L.

(56) References cited:
- EP-A1- 2 877 737
- EP-A1- 3 240 952
- EP-B1- 2 877 737
- EP-B1- 3 240 952
- WO-A1-2013/020959
- GB-A- 2 564 884
- US-A1- 2011 211 966

## Description

The present disclosure relates to wind turbine blades and methods for reducing wind turbine vibrations. More particularly, the present disclosure relates to wind turbine blades and methods for reducing wind turbine vibrations of one or more components of a wind turbine when the wind turbine is parked or idling.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that contains and protects e.g. the gearbox (if present) and the generator and, depending on the wind turbine, further components such as a power converter, and auxiliary systems.

A wind turbine may be stopped or may enter in an idle mode of operation for several reasons. For instance, if the electrical grid is receiving too much energy from a wind farm, a setpoint reduction for the wind farm may be received and some of them may start idling until more energy production is required. Also, a wind turbine may be parked, for example, for performing maintenance on it. In addition, a wind turbine may start idling or may be stopped for security reasons, e.g. if wind gusts may damage the wind turbine. Throughout this disclosure, the terms idle or idling refer to the fact that the wind turbine blades are (slowly) rotating but no energy is produced, namely because the generator is not connected to the grid. A stopped or parked wind turbine may be understood as a wind turbine whose rotor has been locked and is therefore not moving. Herein it may be understood that a wind turbine is in operation when its rotor is rotating at a speed high enough to produce energy and the generator of the wind turbine is producing electrical power.

When a wind turbine is parked or idling, the wind may blow against the wind turbine from unusual directions, i.e. different from normal operation. The airflow around the wind turbine may cause the wind turbine to vibrate. Vibrations may stress and even damage one or more wind turbine components, which may compromise the performance of the wind turbine, may increase the need of reparations and may reduce the lifespan of the wind turbine. As an orientation of a wind turbine blade may not be adapted to the direction of the incoming wind, e.g. through yawing as when the wind turbine is operating, the effects of vibrations may be greater or different when the wind turbine is parked or idling than when the wind turbine is operating normally and producing energy.

GB 2564884A discloses a wind turbine blade including a hub end, a tip end, a leading edge, a trailing edge, a high-pressure side, and a low pressure side. At least one boundary layer fence is located on at least one side of the blade. The fence includes a plurality of passages. Each passage has an inlet on a hub end side of the fence and an outlet on a tip end side of the fence and the cross-section decreases from the inlet to the outlet, oriented to discharge air towards the trailing edge of the blade.

### SUMMARY

In a first aspect of the present disclosure, according to independent claim 1, a wind turbine comprising a wind turbine blade is provided. The wind turbine blade comprises a blade surface, and one or more deflectors attached to the wind turbine blade surface configured to disturb a spanwise component of air flowing around the wind turbine blade, wherein the deflectors include wing fences, and wherein the wing fences are configured to be removed from the wind turbine blade before starting operation of the wind turbine.

In accordance with this aspect, the deflector attached to the wind turbine disturbs a spanwise component of air flowing which may occur specifically around an idling or stopped wind turbine blade. Such disturbance may mitigate or even stop vibration of one or more components of a wind turbine, e.g. the wind turbine blade and/or a wind turbine tower. Without wishing to be bound by theory, in particular vortex-induced vibrations (VIVs) and/or stall-induced vibrations (SIVs) may be reduced.

In a second aspect of the present disclosure, according to independent claim 8, a method for installing a wind turbine blade to a wind turbine is provided.

Herein, it may be understood that "disturbing" or "perturbing" a spanwise component of an air flow refers to modify a magnitude, spanwise turbulence coherence, or other characteristics (in particular turbulent vs laminar flow) of the spanwise component without destroying it, i.e. without avoiding the spanwise component. Thus, a spanwise component keeps existing after an alteration of the airflow. Modifying a magnitude and/or direction of the air flow may perturbate a spanwise component of such air flow. The resulting air flow may be more turbulent.

### BRIEF DESCRIPTION OF THE DRAWINGS

Figure 1 illustrates a perspective view of one example of a wind turbine;
Figure 2 illustrates a simplified, internal view of one example of the nacelle of the wind turbine of the figure 1;
Figure 3 schematically illustrates a perspective view of an example of a wind turbine blade;
Figure 4 schematically illustrates an example of a cross-section of the wind turbine blade of figure 3;
Figure 5 schematically illustrates an example of a cross-section of a wind turbine blade suffering from vortex-induced vibrations;
Figure 6 schematically illustrates an example of a cross-section of a wind turbine blade suffering from stall-induced vibrations;
Figure 7 schematically illustrates a perspective view of a wind turbine blade from which vortices are shed;
Figure 8 schematically illustrates an example of a deflector in cross-section; and
Figure 9 schematically represents an example of a method for promoting a spanwise component of air flowing around a wind turbine blade.

### DETAILED DESCRIPTION OF EXAMPLES

Reference now will be made in detail to embodiments of the invention, one or more examples of which are illustrated in the drawings. Each example is provided by way of explanation of the invention, not as a limitation of the invention.

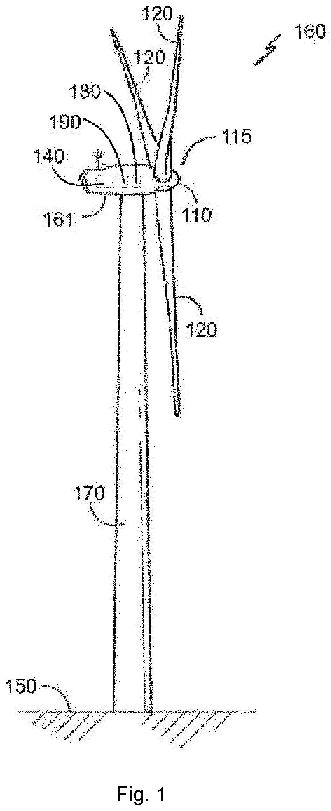

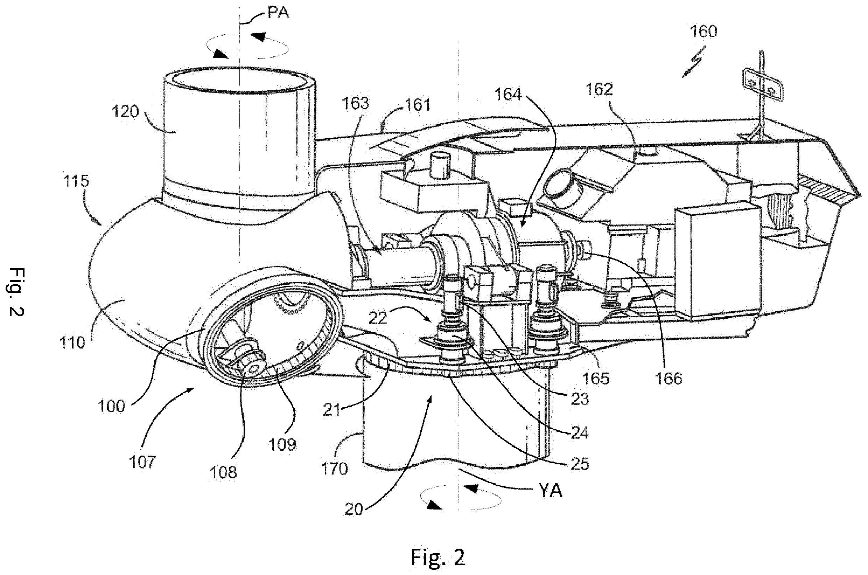

Figure 1 illustrates a perspective view of one example of a wind turbine 160. As shown, the wind turbine 160 includes a tower 170 extending from a support surface 150, a nacelle 161 mounted on the tower 170, and a rotor 115 coupled to the nacelle 161. The rotor 115 includes a rotatable hub 110 and at least one rotor blade 120 coupled to and extending outwardly from the hub 110. For example, in the illustrated embodiment, the rotor 115 includes three rotor blades 120. However, in an alternative embodiment, the rotor 115 may include more or less than three rotor blades 120. Each rotor blade 120 may be spaced about the hub 110 to facilitate rotating the rotor 115 to enable kinetic energy to be transferred from the wind into usable mechanical energy, and subsequently, electrical energy. For instance, the hub 110 may be rotatably coupled to an electric generator 162 (figure 2) positioned within the nacelle 161 to permit electrical energy to be produced.

Figure 2 illustrates a simplified, internal view of one example of the nacelle 161 of the wind turbine 160 of figure 1. As shown, the generator 162 may be disposed within the nacelle 161. In general, the generator 162 may be coupled to the rotor 115 of the wind turbine 160 for generating electrical power from the rotational energy generated by the rotor 115. For example, the rotor 115 may include a main rotor shaft 163 coupled to the hub 110 for rotation therewith. The generator 162 may then be coupled to the rotor shaft 163 such that rotation of the rotor shaft 163 drives the generator 162. For instance, in the illustrated embodiment, the generator 162 includes a generator shaft 166 rotatably coupled to the rotor shaft 163 through a gearbox 164.

It should be appreciated that the rotor shaft 163, gearbox 164, and generator 162 may generally be supported within the nacelle 161 by a support frame or bedplate 165 positioned atop the wind turbine tower 170.

The nacelle 161 is rotatably coupled to the tower 170 through the yaw system 20 in such a way that the nacelle 161 is able to rotate about a yaw axis YA. The yaw system 20 comprises a yaw bearing having two bearing components configured to rotate with respect to the other. The tower 170 is coupled to one of the bearing components and the bedplate or support frame 165 of the nacelle 161 is coupled to the other bearing component. The yaw system 20 comprises an annular gear 21 and a plurality of yaw drives 22 with a motor 23, a gearbox 24 and a pinion 25 for meshing with the annular gear 21 for rotating one of the bearing components with respect to the other.

Blades 120 are coupled to the hub 110 with a pitch bearing 100 in between the blade 120 and the hub 110. The pitch bearing 100 comprises an inner ring and an outer ring. A wind turbine blade may be attached either at the inner bearing ring or at the outer bearing ring, whereas the hub is connected at the other. A blade 120 may perform a relative rotational movement with respect to the hub 110 when a pitch system 107 is actuated. The inner bearing ring may therefore perform a rotational movement with respect to the outer bearing ring. The pitch system 107 of Figure 2 comprises a pinion 108 that meshes with an annular gear 109 provided on the inner bearing ring to set the wind turbine blade into rotation around a pitch axis PA.

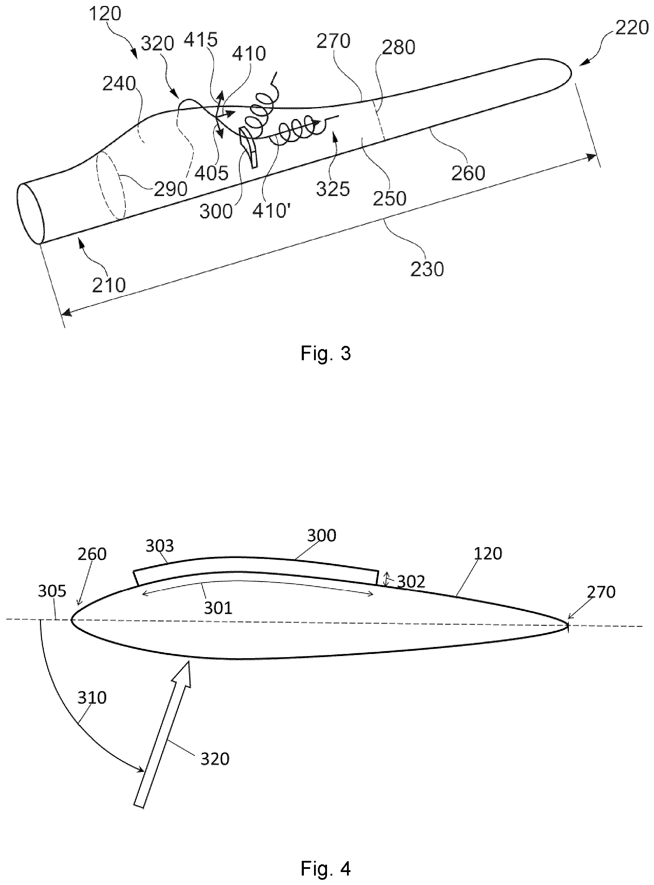

A schematic perspective view of a wind turbine blade 120, e.g. one of the rotor blades 120 shown in figure 1, is illustrated as an example in figure 3. The rotor blade 120 includes a blade root 210, a blade tip 220, a leading edge 260 and a trailing edge 270. The blade root 210 is configured for mounting the rotor blade 120 to the hub 110 of a wind turbine 160. The wind turbine blade 120 extends lengthwise between the blade root 210 and the blade tip 220. A span 230 defines a length of the rotor blade 120 between said blade root 210 and blade tip 220. A chord 280 at a given position of the blade is an imaginary straight line joining the leading edge 260 and the trailing edge 270, the cross-section generally having airfoil shaped cross-section. As is generally understood, a chordwise direction is substantially perpendicular to a spanwise direction. Also, the chord 280 may vary in length as the rotor blade 120 extends from the blade root 210 to the blade tip 220. The wind turbine blade 120 also includes a pressure side 240 and a suction side 250 extending between the leading edge 260 and the trailing edge 270. The rotor blade 120 has an aerodynamic profile and thus an airfoil shaped cross-section 290, such as a symmetrical or cambered airfoil-shaped cross-section.

Wind turbine blade 120 further includes a deflector 300 attached to a suction side 250 according to the example of figure 3. In other examples, a deflector 300 may be attached to a pressure side 240. Or a deflector 300 may extend along both suction side 250 and pressure side 240. The function and structure of this deflector 300 will be explained later on.

Figure 4 illustrates a schematic example of a cross-section at a spanwise position of a wind turbine blade 120, e.g. the wind turbine blade 120 of any of figures 1 and 3. Figure 4 shows an air flow 320, which may reach a wind turbine blade 120 with an angle of attack 310 that is much higher than usual in operation, e.g around 60-70°. Such an angle of attack may occur e.g. when the wind turbine is parked or idling. In such a situation, a yaw system of the wind turbine may be inoperative, and the blades may be in a vane position. Because yawing of the rotor does not occur, wind may come from any angle at a wind turbine.

The angle of attack 310 is measured between the direction of incoming wind and dashed line 305, which indicates a chordwise direction 305. Vibration may happen when a wind turbine 160 is parked or idling and in particular when air flow 320 may reach a wind turbine blade 120 from several directions. Air flow 320 reaching a wind turbine blade 120 from several directions may be referred to as crossflow. Crossflow may enable angles of attack 310 to be high enough to cause one or more wind turbine components to oscillate. The terms vibrating and oscillating may be used interchangeably throughout this disclosure.

It is known in the art that wind may cause oscillations in the wind turbine. It is however generally believed that these oscillations are caused specifically by the nacelle and/or the tower. The present inventors have found that one main cause of the tower and full wind turbine generator oscillations are blade vortex induced vibrations (VIV) and Stall Induced Vibrations (SIV).

At an angle of attack such as the one indicated in figure 4 (e.g. around 60° or 70°), the blade may essentially form a bluff body. Although not visible in the figure, the incoming wind may also have a spanwise component.

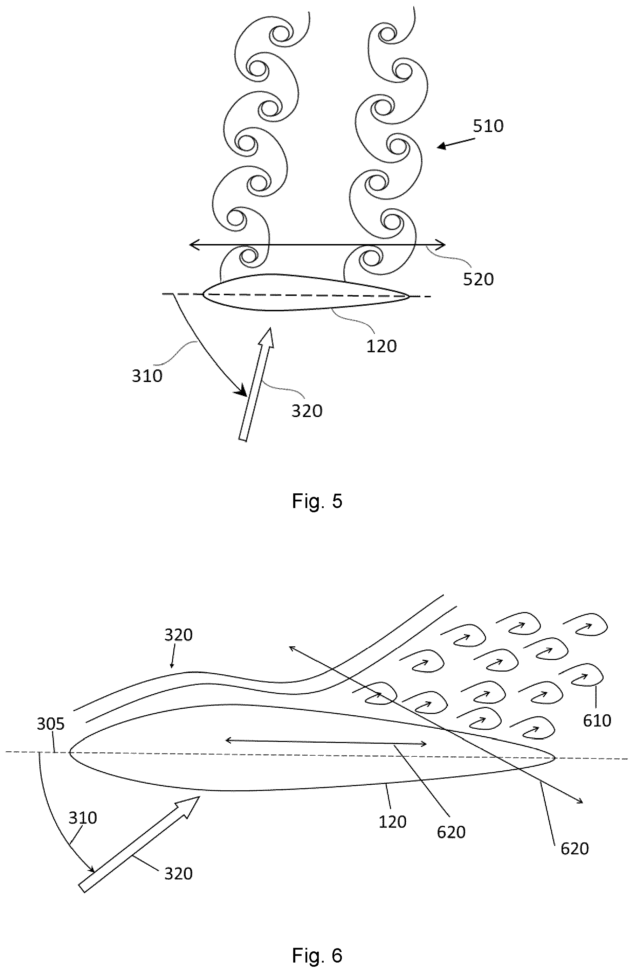

Vibrations in wind turbines may for instance be vortex-induced vibrations (VIVs). In this case, as schematically illustrated in the example of figure 5, wind flowing around a wind turbine blade 120 may cause vortex formation and shedding 510, e.g. in the form of a von Karman vortex street 510 downstream of the wind turbine blade 120. The vortex shedding may cause one or more wind turbine blades 120 and/or the wind turbine tower 170 to start oscillating. For example, a wind turbine blade 120 may start oscillating in a plane substantially parallel to a chord 280 of the wind turbine blade 120, as schematically illustrated by arrow 520 in figure 5. VIVs may stress structural components of the wind turbine 160.

In an example, angles of attack 310 which may cause VIVs may be angles between 60 and 120 °, and specifically between 70° and 110°. In another example, such angles 310 may be between 240 and 300 °. Inflow angles (angle between a chord direction and wind direction in a horizontal plane) between 20 and 50 ° may also favor VIVs and/or SIVs. As such angles of attack 310 may not be encountered when a wind turbine 160 is operating normally, e.g. when the wind turbine blades 120 may be yawed and/or pitched, VIVs may mainly take place and may become particularly problematic when a wind turbine 160 is parked or idling.

Vibrations may also be stall-induced vibrations (SIVs). In this case, the angle of attack 310 is such that it causes air flow to separate from a surface of a wind turbine blade 120 and vortex 610 formation and flow downstream the wind turbine blade 120. In some examples, the angle of attack 310 of an airflow may be between 15° and 30 °. A schematic illustration of this effect is illustrated in figure 6. These vortices 610 may cause the wind turbine blade 120 to oscillate in a plane substantially parallel and/or inclined with respect to a chord 280 of the wind turbine blade 120, as schematically illustrated by arrows 620 in figure 6. Again, such oscillations may cause stress in structural components of the wind turbine 160 and cause fatigue damage and even potentially cause catastrophic failure of the wind turbine. As modern wind turbines may rarely encounter stall in operation, SIVs may affect an idling, and more particularly, a parked wind turbine.

Referring back to figure 3, in an aspect, a wind turbine blade 120 comprises a deflector 300 attached to the wind turbine blade 120 such that the deflector 300 perturbates or disturbs a spanwise component 410 of air 320 flowing around the wind turbine blade 120 when the wind turbine blade 120 is mounted to a wind turbine 160 and the wind turbine 160 is parked or idling. An example of such a deflector 300 in cross-section may be seen in figure 4.

Disturbing a spanwise component 410 (see figure 3) of air 320 flowing around the wind turbine blade 120 may reduce and even stop vibration of one or more components of a wind turbine 160, e.g. the wind turbine blade 120. In some examples, disturbing a spanwise component 410 of air 120 flowing around a wind turbine blade 120 may reduce and even stop vibration of the entire wind turbine 160. In particular, VIVs and/or SIVs may be mitigated.

A direction of air 320 flowing around a wind turbine 120 may be decomposed into a spanwise component 410, a chordwise component 405 and a vertical component 415. The vertical component is perpendicular to the spanwise component 410 and to the chordwise component 405. A deflector 300 may modify a magnitude and/or direction of air flow 320, and in particular may disturb a spanwise component 410 of the air flow 320 without destroying, i.e. making disappear, the spanwise component 410, as schematically shown in figure 3. In general, the chordwise component 405, which mostly dominates in normal turbine operation, may not be destroyed either.

As it can be seen in figure 3, deflector 300 modifies a direction and/or magnitude of air flow 320, and in particular a magnitude of a spanwise component 410 of said air flow 320. Passing against and over deflector 300, air flow 320 may become more turbulent. A magnitude of a spanwise component 410' of the resulting air flow 325 may be enhanced. I.e., spanwise flow 410' after the interaction of an incoming airflow with a deflector 300 may be promoted. In the context of interaction with a deflector 300, an incoming air flow may refer to an air flow approaching and surrounding a wind turbine blade 120 before meeting the deflector 300. A resulting air flow 325 may be understood as the air flow 325 remaining after the incoming air flow has met deflector 300.

In some examples, the wind turbine blade 120 is configured to make vortex sheddings 510 uncoherent along the span of the blade.

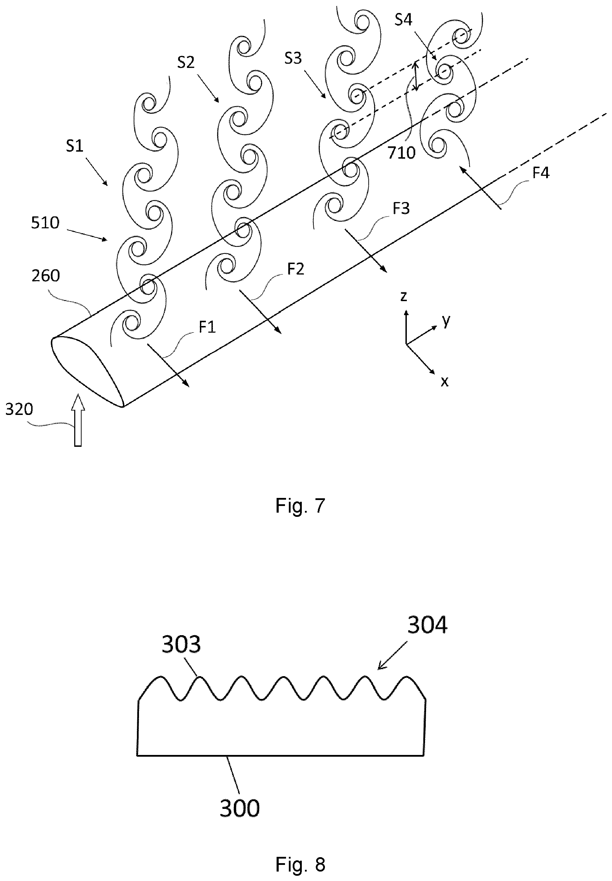

As schematically shown in figure 7, vortex shedding may occur at several positions along a length or span 230 of a wind turbine blade 120. In this regard, if in figure 7 wind comes upwards 320, i.e. in a direction substantially parallel to the indicated z axis in this figure, a von Karman street 510 may be imagined downstream of all these positions. For instance, and just for illustrative purposes, one could imagine that four von Karman streets S1, S2, S3 and S4 may be formed as schematically illustrated in figure 7. S1 to S4 may propagate in a plane xz. As illustrated in figure 7, the z axis is perpendicular to the x and the y axes, wherein the x axis is parallel to a chord 280 of the wind turbine blade 120 and the y axis is parallel to a length 230 of the wind turbine blade 120.

S1 and S2 may be spanwise coherent because the forces F1 and F2 cause to the wind turbine blade 120 by S1 and S2, respectively, substantially go in the same direction at the same time. In the example of figure 7, F1 and F2 go in the +x direction. Therefore, these two forces add up and vibration e.g. of the wind turbine blade 120 may be enhanced.

However, S3 and S4 may not be spanwise coherent because in this example the forces F3 and F4 caused to the wind turbine blade 120 by S3 and S4, respectively, substantially go in opposite directions at the same time. In this example, F3 goes in the +x direction and F4 goes in the +x direction. This may be due to the fact that an offset 710 between S3 and S4 may exist. As indicated in figure 7, an offset 710 may be measured in a direction substantially perpendicular to a length 230 and a chord 280 of the wind turbine blade 120, i.e. in a z direction. In this particular example, the offset 710 is such that F3 and F4 go in opposite directions with a same magnitude. Thus, force F3 may be cancelled by force F4, and vibrations, e.g. of the wind turbine blade 120, may be reduced.

Hence, making two or more vortex sheddings 510 to be spanwise uncoherent may be understood as decorrelating the vortex sheddings 510, e.g. by increasing an offset among the vortex sheddings 510. Accordingly, a deflector 300 attached to a wind turbine blade 120 may make vortex sheddings 510 spanwise uncoherent by decorrelating them, e.g. by making them less similar in the vicinity of a same point in the y-axis of figure 7. This may cause an offset 710 between them. Vibrations, e.g. VIVs, may be accordingly reduced.

It is noted that decorrelating two or more vortex sheddings 510 may not necessarily cause forces in opposite directions to arise. For instance, forces may still act in a same direction as before decorrelation, but a magnitude and/or a phase matching of one or more of the forces may have decreased. Thus, a force exerted by the plurality of vortex sheddings 510 acting on a wind turbine blade 120 may be lower than before the decorrelation. In such a case, vibrations may also be reduced.

According to the invention, the deflectors of the wind turbine blade 120 are configured to promote a turbulent air flow 325, resulting from the crossflow component in idling or parked condition, along a length 230 of the wind turbine blade 120. Herein, promoting a turbulent air flow 325 along a 230 length of the wind turbine blade 120 may refer to the fact that air flow 325 after passing over deflector 300 is more turbulent than an incoming air flow and/or the air flow without the deflector. If air flow becomes more turbulent after meeting deflector 300, in particular in a spanwise direction, oscillations in a wind turbine (particularly a parked or idling wind turbine) may be reduced. In normal operation, the spanwise component 325 is relatively small or negligent, and the deflector 320 does not disturb the normal flow allowing the blade operate as designed at optimal conditions.

For instance, if a surface, e.g. a portion of a suction side 250 of the wind turbine blade 120, is suffering from the effects of crossflow, a turbulent air flow 325 occurring over this surface may modify the air flowing over it and vibrations of the blade 120 may be reduced. This may reduce vibrations of the wind turbine 160, in particular VIVs and/or SIVs.

In some examples, the deflector 300 may be an elongated deflector 300 attached to the wind turbine blade 120 such that a length of the deflector 300 follows a perimeter of the wind turbine blade 120 in cross-section and the deflector 300 protrudes from a surface of the wind turbine blade 120. An example of an elongated deflector 300 may be seen in figure 4. Deflector 300 may be substantially a flat plate extending both along the pressure side and the suction side and from the leading edge to the trailing edge.

In some examples, as e.g. as illustrated in figure 4, the elongated deflector 300 protrudes substantially perpendicular to a local surface of the wind turbine blade 120. A local surface may be understood as a surface to which the elongated deflector is attached to. Such perpendicularity, or in other words, a plane of symmetry defined by a length 301 and a height 302 of the deflector 300, may enable homogenizing an action by the deflector 300 on an incoming air flow independently of its direction. In some other examples, the elongated deflector 300 may not protrude substantially perpendicular to a local surface. For example, it may happen that an angle of inclination between the deflector 300 and a local surface of the wind turbine blade 120 to which deflector 300 is attached to may be selected according to particularities of air flowing in the region where a wind turbine 160 is located.

The elongated deflector 300 may be attached to a wind turbine blade 120 at any distance from the tip 220 of the wind turbine blade 120. In some examples, the body 300 is attached to the wind turbine blade 120 at 20% to 80% of the span, and specifically between 20 and 60% of the span. This range of distances enables achieving a balance between mitigating vibrations and affecting the performance of the wind turbine 160 in normal operation. For instance, if a deflector 300 is placed outside this range, e.g. close to the root 210 or close to the tip 220, the deflector 300 may miss a lot of incoming airflow or may cause excessive noise, respectively. Thus, in this range vibrations may be reduced while the performance of the wind turbine 160 may not, or may barely be, negatively affected. In an example, a wind turbine blade 120 may have a length 230 or span 230 of 70 m and a deflector 300 may be attached 30 m away from the blade root 210. More than one deflector may be installed in some cases, especially for very long blades.

One way of determining a suitable location for deflectors according to the present disclosure is to use an aeroelastic analysis of a blade along its length to calculate or estimate which portions of the blade contribute positively to a vibration (i.e. the wind transfers energy to the blade) and which portion of the blade reduce a vibration (i.e. these portions transfer energy from the blade to the wind). One measure to determine such a contribution is the aerodynamic work per cycle. The deflectors may be placed particularly in areas of the blade where the contribution of the blade to a vibration is positive.

Such a process may be reiterative, i.e. a simulation or aeroelastic analysis is made on a simulated blade having one or more deflectors.

In some examples, a height 302 of the deflector 300 is between 0.1 and 2 times of the local (maximum) thickness of the airfoil of the wind turbine blade 120. In this range, a balance between vibration reduction and affecting the performance of the wind turbine 160 may be achieved. If the height 302 of the deflector 300 is too small, e.g. less than 0.1 times the local thickness of the wind turbine blade 120, vibrations may not be sufficiently attenuated, since the deflector may not sufficiently disturb a spanwise flow. If the height 302 of the deflector 300 is too big, e.g. more than twice the local thickness of the wind turbine blade 120, the performance of the wind turbine 160 may be excessively affected in a negative way. Also, a relatively large deflector might add significant weight to the blade. In an example, a height 302 of deflector 300 may be 40 cm.

A length 301 of the deflector 300 may extend partially or totally over a local chord of the blade. In figure 4, a length 301 of the deflector 300 extends partially along the profile of the local cross-section of the blade, i.e. only a portion of a blade between the leading edge and the trailing edge is covered. In some examples, the deflector 300 covers, at least in part, at least one of: a leading edge 260 and a trailing edge 270 of the wind turbine blade 120.

In some other examples, a length 301 of the deflector 300 may extend from the local leading edge to the local trailing edge, and follow the entire local profile.

The dimensions of the deflector 300 and its position on the wind turbine blade 120 may be chosen depending e.g. on shape and dimensions of the wind turbine blade. In this regard, computer simulations may be performed in order to optimize the dimensions and location of the deflector 300 on a wind turbine blade 120.

In some examples, a top 303 of the deflector 300 comprises irregularities 304, i.e. along its length, the deflector may have a non-constant height. A top 303 may be understood as a side of the deflector 300 opposed to the side of the deflector 300 which is attached to the wind turbine blade 120. Figure 8 shows an example of a deflector 300 having a top 303 including irregularities 304. Irregularities 304 may include protrusions and/or recesses. The irregularities 304 may extend over the entire top 303 of the deflector 300, as shown in figure 8, or may extend over a portion of it. Figure 8 shows an undulated top 303 of the deflector 300, but irregularities 304 having a different shape, e.g. a triangular or rectangular shape, are possible. Irregularities 304 may facilitate disturbing a spanwise component of air flowing around the wind turbine blade as disclosed herein.

A deflector 300 may be made from (light) metals or composite materials such as fiberreinforced polymers. In some examples, a deflector 300 may be made of carbon fiber or glass fiber. A deflector 300 may be strong and lightweight accordingly.

According to the invention, a deflector 300 is a wing fence and may in some examples be similar to a flat plate, and is generally similar to boundary layer fences or vortilons on a wing plane. I.e. they may be relatively thin and extend from both the pressure surface and suction surface of a blade.

It is however noted that the purpose and functioning of such wing fences and vortilons differ from the purpose and functioning of a deflector 300 described herein. In particular, wing fences on an aircraft wind aim at stopping or destroying an air flow spanwise component, whereas in the present disclosure the objective is not to eliminate a spanwise component (this would in any case hardly be possible depending on the wind direction). Rather, the objective is to disturb an air flow spanwise component, e.g. by making it more turbulent. Herein an air flow spanwise component may be enhanced. Thus, the functioning and objective of the devices on plane wings are distinct, and even rather opposite, than the ones of deflectors 300.

Although one deflector 300 is shown in figures 3 and 4, more than one deflector 300 may be placed on a wind turbine blade 120. Computer simulations may be performed to optimize a number of deflectors 300 to be attached to a wind turbine blade 120.

According to the invention, a wind turbine 160, e.g. the wind turbine 160 of figure 1, comprises a wind turbine tower 170, a nacelle 161 on top of the tower 170, a rotor 115 mounted to the nacelle 161 and one or more wind turbine blades 120 comprising one or more wind turbine blades 120 including one or more deflectors 300 as described herein.

According to another aspect, a wind turbine blade is provided, which comprises a blade surface extending from a blade root to a blade tip, and having a pressure surface and a suction surface, wherein a span of the blade is defined by a distance between the blade root and the blade tip. The blade comprising a deflector attached to the blade surface may is configured to promote turbulence of a spanwise flow along the wind turbine blade. In particular, the deflector may promote turbulence of a spanwise flow along a span of the wind turbine blade in idling or parked conditions in presence of crossflow wind.

As explained above, a wind turbine blade 120 comprising one or more of such a deflectors 300 may reduce vibrations of one or more components of a wind turbine 160, e.g. by disturbing a spanwise component 410 of air flowing around the wind turbine blade 120. Similarly, in some examples, the wind turbine blade 120 may be configured to make two or more vortex sheddings 510 to be spanwise uncoherent. In these or other examples, the wind turbine blade 120 may be configured to create a spanwise-uncorrelated turbulent air flow along a length 230 of the wind turbine blade 120. Accordingly, VIVs and/or SIVs may be in particular reduced.

In some examples, the elongated deflector 300 is attached to the wind turbine blade 120 between 0.2 and 0.8 times of a length 230 of the wind turbine blade 120 from the tip 220 of the wind turbine blade 120. This range of distances may provide for a more effective oscillation mitigation as explained above.

In some examples, a height 302 of the elongated deflector 300 is between 0.1 and 2 times of a local wind turbine blade 120 thickness. Also as indicated above, a height 302 in this range may provide for vibration reduction without excessively affecting a wind turbine 160 performance in a negative way.

Any of the features commented for the deflector 300 above may also be applied to the elongated deflector 300 of this aspect. For instance, the elongated deflector 300 may cover, at least in part, a leading edge 260 and/or a trailing edge 270 of the wind turbine blade 120. In some examples, a top 303 of the deflector 300 comprises irregularities 304.

According to the invention, a wind turbine 160 comprising a wind turbine tower 170, a nacelle 161 on top of the tower 170, a rotor 115 mounted to the nacelle 160, and one or more wind turbine blades 120 including one or more deflectors 300 according to this aspect mounted to the rotor 115 is provided.

The present disclosure provides a method 900 for installing a wind turbine blade. The method comprises providing a wind turbine blade having one or more deflectors attached to the wind turbine blade, wherein the deflectors are configured to disturb a spanwise component of an air flow along the wind turbine blade,
installing the wind turbine blade to a hub of a wind turbine, and removing the deflectors from the wind turbine blade before starting operation of the wind turbine.

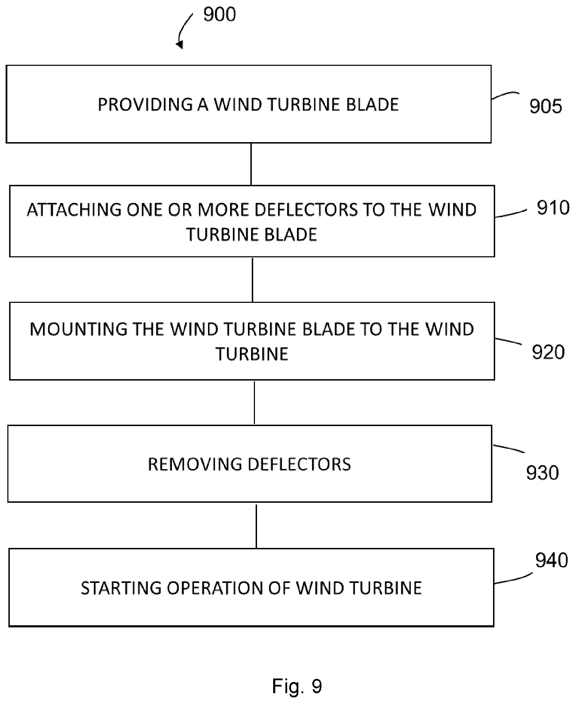

In figure 9, an example of a method 900 for installing a wind turbine blade.

The method includes, at block 905, providing a wind turbine blade 120, one or more deflectors 300. At block 910, one or more deflectors are attached to the wind turbine blade. In other examples, a blade may be provided from a manufacturing facility with the deflectors already attached. The one or more deflectors 300 may be as any of the deflectors 300 described herein. For instance, a deflector 300 may be an elongated deflector, and more in particular an elongated flat plate.

The deflector 300 may be formed by a single piece, but in the example of the deflector 300 completely surrounding a wind turbine blade 120 cross-section, the deflector 300 may be formed by more than one piece and the pieces may be attached to one another to form the deflector 300. The assembly of the plurality of pieces may be done before attaching the deflector 300 to the wind turbine blade 120 or the pieces may be attached to the blade 120 then among them to form deflector 300. Alternatively, the deflector 300 may be a single piece and it may be slid along the wind turbine blade 120 until its final position.

Method 900 further comprises, at block 920, mounting the wind turbine blade 120 to the wind turbine 160. This step may be performed before attaching one or more deflectors 300 to the wind turbine blade 120 or after attaching them. In both cases, the wind turbine 160 further comprises a nacelle 161 on top of the tower 170 and a rotor 115 mounted to the nacelle 161, and the method may further comprise mounting the wind turbine blade 120 to the rotor 115 of the wind turbine 160.

The attachment between a deflector 300 and a wind turbine blade 120 is not permanent. In accordance with the invention, at block 930, one or more deflectors 300 are detached from the wind turbine blade 120. In this case, the method further comprises removing one or more deflectors 300 from a wind turbine blade 120 before starting operation of the wind turbine 160. The deflectors 300 are only on the wind turbine blade 120 when the wind turbine 160 is not in operation and may have a bigger height 302, e.g. more than one time of a local wind turbine blade 120 thickness.

A deflector 300, or a piece of a deflector 300, may be attached to a wind turbine blade 120 by using at least one of gluing, or mechanically fastening.

In accordance with the example of figure 9, after removing the deflectors, the operation of the wind turbine may be (re)started at block 940.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims. Aspects from the various embodiments described can be mixed and matched by one of ordinary skill in the art to construct additional embodiments and techniques in accordance with principles of this application. Reference signs related to drawings are placed in parentheses in a claim, and solely attempt to increase the intelligibility of the claim, and shall not be construed as limiting the scope of the claim.

## Claims

1. A wind turbine (160) comprising:
a wind turbine tower (170);
a nacelle (161) on top of the tower (170); and
a rotor (115) mounted to the nacelle (161),
wherein the rotor (115) comprises a hub (110) and one or more wind turbine blades (120),
wherein the one or more wind turbine blades (120) comprise:
a blade surface, and one or more wing fences (300) attached to the wind turbine blade surface configured to disturb a spanwise component (410) of air (320) flowing around the wind turbine blade (120), and wherein the wing fences (300) of the wind turbine blade (120) are configured to promote a turbulent spanwise air flow (325),
**characterised in that**
the wing fences (300) are configured to be removed from the wind turbine blade (120) before starting operation of the wind turbine (160).

2. The wind turbine (160) of claim 1, wherein one or more of the wing fences is attached at a position of between 20 and 80% of a span of the blade, and specifically at a position of between 20% and 60% of the span.

3. The wind turbine (160) of any of claims 1 - 2, wherein a height (302) of the wing fence is between 0.1 and 2 times of a maximum thickness of a local airfoil of the wind turbine blade (120).

4. The wind turbine (160) of any of claims 1 - 3, wherein the wing fences are configured to make vortex sheddings (510) uncoherent along a span of the blade (120).

5. The wind turbine (160) of any of claims 1 - 4, wherein the wing fence is an elongated plate protruding from a surface of the wind turbine blade (120) and extending substantially along a local chord direction.

6. The wind turbine (160) of claim 5, wherein the wing fence protrudes from a pressure surface (240) and a suction surface (250) of the blade (120).

7. The wind turbine (160) of any of claims 1 - 6, wherein the wing fence covers, at least in part, at least one of: a leading edge (260) and a trailing edge (270) of the wind turbine blade (120).

8. A method for installing a wind turbine blade (120) to a wind turbine (160), the method comprising:
providing a wind turbine blade (120) having one or more deflectors (300) attached to the wind turbine blade (120), wherein the deflectors (300) are wing fences, and wherein the wing fences (300) are configured to disturb a spanwise component (410) of an air flow (320) along the wind turbine blade (120),
installing the wind turbine blade (120) to a hub (110) of the wind turbine (160), and
removing the wing fences (300) from the wind turbine blade (120) before starting operation of the wind turbine (160).

9. The method of claim 8, wherein the wing fences are configured to promote turbulence in the spanwise component (410) of an air flow (320) along the wind turbine blade (120).

10. The method of claim 8 or 9, wherein the wind turbine blades (120) comprises a plurality of wing fences, wherein the wing fences are provided at a position between 20 and 80% of a span of the blade (120).

## Patentansprüche

1. Eine Windturbine (160), die Folgendes umfasst:
einen Windturbinenturm (170);
eine Gondel (161) an der Spitze des Turms (170); und
einen Rotor (115), der an der Gondel (161) befestigt ist,
wobei der Rotor (115) eine Nabe (110) und ein oder mehrere Windturbinenblätter (120) umfasst,
wobei das eine oder die mehreren Windturbinenblätter (120) Folgendes umfassen:
eine Blattoberfläche, und einen oder mehrere Grenzschichtzäune (300), die an der Windturbinenblattoberfläche angebracht sind, die so konfiguriert sind, dass sie eine Spannweiten-Komponente (410) von Luft (320), die um das Windturbinenblatt (120) strömt, stören, und wobei die Grenzschichtzäune (300) des Windturbinenblatts (120) so konfiguriert sind, dass sie eine turbulente Luftströmung (325) in Spannweitenrichtung fördern,
**dadurch gekennzeichnet, dass**
die Grenzschichtzäune (300) so konfiguriert sind, dass sie von dem Windturbinenblatt (120) entfernt werden, bevor die Windturbine (160) in Betrieb genommen wird.

2. Windturbine (160) nach Anspruch 1, wobei einer oder mehrere der Grenzschichtzäune an einer Position zwischen 20 und 80 % einer Spannweite des Blattes und insbesondere an einer Position zwischen 20 und 60 % der Spannweite angebracht sind.

3. Windturbine (160) nach einem der Ansprüche 1 bis 2, wobei eine Höhe (302) des Grenzschichtzaunes zwischen dem 0,1- und 2-fachen einer maximalen Dicke eines lokalen Profils des Windturbinenblatts (120) beträgt.

4. Die Windturbine (160) nach einem der Ansprüche 1 bis 3, wobei die Grenzschichtzäune so konfiguriert sind, dass sie Wirbelablösungen (510) entlang einer Spannweite des Flügels (120) unkohärent machen.

5. Die Windturbine (160) nach einem der Ansprüche 1 bis 4, wobei der Grenzschichtzaun eine längliche Platte ist, die von einer Oberfläche des Windturbinenblatts (120) vorsteht und sich im Wesentlichen entlang einer lokalen Sehnenrichtung erstreckt.

6. Windturbine (160) nach Anspruch 5, wobei der Grenzschichtzaun von einer Druckfläche (240) und einer Saugfläche (250) des Blattes (120) vorsteht.

7. Windturbine (160) nach einem der Ansprüche 1 bis 6, wobei der Flügelzaun zumindest teilweise zumindest eine der folgenden Kanten abdeckt: eine Vorderkante (260) und eine Hinterkante (270) des Windturbinenblatts (120).

8. Verfahren zum Installieren eines Windturbinenblattes (120) an einer Windturbine (160), wobei das Verfahren umfasst:
Bereitstellen eines Windturbinenblatts (120) mit einem oder mehreren Deflektoren (300), die an dem Windturbinenblatt (120) angebracht sind, wobei die Deflektoren (300) Grenzschichtzäune sind, und wobei die Grenzschichtzäune (300) so konfiguriert sind, dass sie eine Spannweitenkomponente (410) einer Luftströmung (320) entlang des Windturbinenblatts (120) stören,
Installieren des Windturbinenblatts (120) an einer Nabe (110) der Windturbine (160), und
Entfernen der Grenzschichtzäune (300) von dem Windturbinenblatt (120) vor dem Start des Betriebs der Windturbine (160).

9. Verfahren nach Anspruch 8, wobei die Grenzschichtzäune so konfiguriert sind, dass sie Turbulenzen in der Spannweitenkomponente (410) einer Luftströmung (320) entlang des Windturbinenblatts (120) fördern.

10. Verfahren nach Anspruch 8 oder 9, wobei die Windturbinenblätter (120) eine Vielzahl von Grenzschichtzäunen umfassen, wobei die Grenzschichtzäune an einer Position zwischen 20 und 80% einer Spannweite des Blattes (120) vorgesehen sind.

## Revendications

1. Une éolienne (160) comprenant :
une tour d'éolienne (170) ;
une nacelle (161) au sommet de la tour (170) ; et
un rotor (115) monté sur la nacelle (161),
dans lequel le rotor (115) comprend un moyeu (110) et une ou plusieurs pales d'éolienne (120),
dans lequel une ou plusieurs pales d'éolienne (120) comprennent :
une surface de pale, et une ou plusieurs cloisons anti-décrochage (300) attachées à la surface de la pale d'éolienne configurées pour perturber une composante d'envergure (410) de l'air (320) s'écoulant autour de la pale d'éolienne (120), et dans laquelle les cloisons anti-décrochage (300) de la pale d'éolienne (120) sont configurées pour favoriser un écoulement d'air turbulent d'envergure (325),
**caractérisé par le fait que**
les cloisons anti-décrochage (300) sont configurées pour être retirées de la pale de l'éolienne (120) avant la mise en service de l'éolienne (160).

2. L'éolienne (160) de la revendication 1, dans laquelle une ou plusieurs des cloisons anti-décrochage sont fixées à une position comprise entre 20 et 80 % de l'envergure de la pale, et plus particulièrement à une position comprise entre 20 et 60 % de l'envergure.

3. L'éolienne (160) de l'une des revendications 1 à 2, dans laquelle la hauteur (302) de la cloison anti-décrochage est comprise entre 0,1 et 2 fois l'épaisseur maximale d'un profil local de la pale de l'éolienne (120).

4. L'éolienne (160) de l'une des revendications 1 à 3, dans laquelle les cloisons anti-décrochage sont configurées pour rendre les tourbillons (510) incohérents le long d'une portée de la pale (120).

5. L'éolienne (160) de l'une des revendications 1 à 4, dans laquelle la cloison anti-décrochage est une plaque allongée dépassant d'une surface de la pale de l'éolienne (120) et s'étendant sensiblement le long d'une direction de corde locale.

6. L'éolienne (160) de la revendication 5, dans laquelle la cloison anti-décrochage fait saillie à partir d'une surface de pression (240) et d'une surface d'aspiration (250) de la pale (120).

7. L'éolienne (160) de l'une des revendications 1 à 6, dans laquelle la cloison anti-décrochage couvre, au moins en partie, au moins l'un des éléments suivants : un bord d'attaque (260) et un bord de fuite (270) de la pale de l'éolienne (120).

8. Méthode d'installation d'une pale d'éolienne (120) sur une éolienne (160), consistant à
fournir une pale d'éolienne (120) ayant un ou plusieurs déflecteurs (300) fixés à la pale d'éolienne (120), dans laquelle les déflecteurs (300) sont des cloisons anti-décrochage, et dans laquelle les cloisons anti-décrochage (300) sont configurées pour perturber une composante d'envergure (410) d'un flux d'air (320) le long de la pale d'éolienne (120),
installer la pale de l'éolienne (120) sur un moyeu (110) de l'éolienne (160), et
retirer les cloisons anti-décrochage (300) de la pale de l'éolienne (120) avant de commencer à faire fonctionner l'éolienne (160).

9. La méthode de la revendication 8, dans laquelle les cloisons anti-décrochage sont configurées pour promouvoir la turbulence dans la composante d'envergure (410) d'un flux d'air (320) le long de la pale de l'éolienne (120).

10. La méthode de la revendication 8 ou 9, dans laquelle les pales de l'éolienne (120) comprennent une pluralité de cloisons anti-décrochage, dans laquelle les cloisons anti-décrochage sont fournies à une position entre 20 et 80% de l'envergure de la pale (120).
